# EUROPÄISCHE PATENTSCHRIFT

(11) **EP 1 969 917 B1**
(45) Veröffentlichungstag und Bekanntmachung des Hinweises auf die Patenterteilung: **24.02.2010**
(21) Anmeldenummer: 07123436.3
(22) Anmeldetag: 18.12.2007
(51) Int. Cl.: A01D 41/12

(54) **Mähdrescher**
Combine harvester
Moissonneuse-batteuse

(30) Priorität: 16.03.2007 DE 102007013386
(43) Veröffentlichungstag der Anmeldung: 17.09.2008
(73) Patentinhaber: CLAAS Selbstfahrende Erntemaschinen GmbH, 33428 Harsewinkel (DE)
(72) Erfinder: Scholz, Egbert, 33729 Bielefeld (DE); Meyer zu Rheda, Stephan, 33428, Harsewinkel (DE); Auf der Landwehr, Christian, 48231 Warendorf (DE)

(56) Entgegenhaltungen:
- EP-A- 0 627 159
- EP-A- 1 488 677
- EP-A- 1 564 157

## Beschreibung

Die Erfindung betrifft einen Mähdrescher nach dem Oberbegriff des Anspruchs 1.

Aus der EP 1 488 677 A2 ist der Korntank eines Mähdreschers bekannt, der einen zweiteiligen Deckel aufweist, welcher von einer Schließstellung in eine Offenstellung oder umgekehrt bringbar ist. Hierzu sind die beiden Teile des Deckels jeweils mit Gestängen eine Hebemechanismus verbunden, die über gekoppelte Drehachsen mittels eines manuell bedienbaren Hebels bewegbar sind. Der Hebel befindet sich an einer Außenseite des Korntanks, an einer für den Bediener leicht erreichbaren Stelle, Die beiden Endlagen werden bestimmt durch einen Kniehebelmechanismus, der zwischen der Drehachse des Hebels und einer Drehachse des Hebemechanismus angeordnet ist. In der Schließstellung befindet sich der Hebel von seiner Drehachse aus gesehen in einer Störung, die zur Lotachse ca. 20° schräg nach Unten und in Fahrtrichtung weist. In der Offenstellung befindet sich der Hebel von seiner Drehachse aus gesehen dann in einer Stellung, die zur Lotachse ca. 160° schräg nach Oben und in Fahrtrichtung weist, Somit durchläuft der Hebel zwischen seinen Endlagen um seine Drehachse herum einen Kreisbogen von ca. 140° Nachteilig an dem aus dem Stand der Technik bekannten Mähdrescher ist es, dass der Bediener sehr viel Kraft benötigt, um den des Korntanks zwischen den beiden Endlagen zu verstellen. Weiterhin ist es nachteilig, dass der Hebel in beiden Endlagen in Fahrtrichtung weist, so dass sich beispielsweise bei der Fahrt an Bäumen vorbei Äste zwischen dem Korntankgehäuse und dem Hebel verhaken können, was zu Beschädigungen und schlimmstenfalls zu einem Abreißen des Hebels führen kann.

Aufgabe der vorliegenden Erfindung ist es, einen gemäß dem Oberbegriff des Anspruchs 1 ausgebildeten Mähdrescher derart weiterzubilden, dass für den Bediener eine einfache und kraftschonende Verstellung des Deckels ermöglicht wird.

Diese Aufgabe wird erfindungsgemäß durch die kennzeichnenden Merkmale des Anspruchs 1 gelöst

Dadurch, dass der Hebel bei der Verstellung zwischen den beiden Endogen um seine Drehachse herum einen Kreisbogen von mindestens 270° durchläuft, bei gleichbleibenden Verstellweg des Deckels die benötigte Kraft zu Verstellung auf einen größeren Verstellweg des Hebels verteilt werden, was dazu fuhrt, dass der Bediener weniger Kraft benötigt, um den zumindest einen Deckel zwischen den beiden Endlagen zu verstellen,

Bei einer vorteilhaften Weiterbildung durchläuft der Hebel bei der Verstellung zwischen den beiden Endlagen um seine Drehachse herum einen Kreisbogen von annähernd 360", so dass sich der Kraftangriffspunkt für den Bediener immer an der gleichen Stelle befindet.

Eine gute Bedienbarkeit und des ist für den Bediener dadurch gewährleistet, dass die Drehachse des Hebels im Wesentlichen quer zur Längsachse des Mähdreschers liegt und dass der Hebel in einem Seiten bereich des Mähdreschers angeordnet ist.

Vorteilhaft, eilt die Drehachse in Fahrtrichtung gesehen dem Hebel in zumindest einer seiner Endogen voraus, so dass der Hebel entgegen der Fahrtrichtung geneigt ist, was den Vorteil bietet, dass eventuell seitlich am Mähdreschers endlangstreifende 10Aste von Bäumen durch den Hebel abgestreift werden ohne sich in ihm zu verfangen. Besonders vorteilhaft ist es, wenn die Drehachse in Fahrtrichtung gesehen dem Hebel in beiden Endogen so dass es weder in der Schließstellung noch in der Offenstellung zu Problemen durch beispielsweise im Fahrbereich befindliche Äste gibt.

Bei einer alternativen Ausbildung der Erfindung ist eine gute Bedienbarkeit und Erreichbarkeit des Hebels dadurch gewährleistet, dass die Drehachse des Hebels im Wesentlichen parallel zur Längsachse des Mähdreschers liegt und dass der Hebel im Bereich einer in Fahrtrichtung weisenden und quer zur Längsachse des Mähdreschers orientierten Seitenwandung des Mähdreschers angeordnet ist.

Um den Hebel besonders bedienerfreundlich beispielsweise in der der Fahrerkabine anzuordnen sind bei einer vorteilhaften Weiterbildung der Erfindung die Drehachse des Hebels und zumindest eine Drehachse des Hebemechanismus versetzt zueinander angeordnet.

Bei einer vorteilhaften der Erfindung ist ein Getriebe zwischen der Drehachse des Hebels und der Drehachse des Hebemechanismus angeordnet so dass die für die Verstellung des Deckels zwischen den Endlagen erforderliche Kraft des Bedieners auf ein Minimum reduzierbar sind.

Das Getriebe ist vorteilhaft als formschlüssiges Getriebe, insbesondere als Kettengetriebe, als Doppelgelenk oder als Zahnradgetriebe ausgebildet, so dass es einfach und kostengünstig herstellbar ist, einen geringen Platz- und Wartungsbedarf hat und die Bedienkräfte schlupffrei in beide Wirkrichtungen sicher übertragbar sind.

Vorteilhaft weist das Getriebe zwischen der Drehachse des Hebels als Eingangsseite und der Drehachse des Hebemechanismus als Ausgangsseite ein Übersetzungsverhältnis größer 1 auf, so dass durch eine Verlägerung des Verstellweges des Hebels gegenüber dem Verstellweg des Hebemechanismus die benötigte Bedienkraft verringert werden kann.

Um sowohl den Hebel als auch den Hebemechanismus vor Beschädigungen aufgrund von Drehungen des Hebels in eine falsche Richtung zu schützen, sind der Drehachse des Hebels und/oder der zumindest einen Drehachse des Hebemechanismus Anschlage zugeordnet, die die beiden Endlagen festlegen.

Um den Hebel möglichst bedienerfreundlich zu gestalten, ist er von seiner Drehachse aus gesehen als einseitiger Hebel, als zwei- oder mehrseitiger Hebel oder als um die Drehachse rotierendes Handrad ausgebildet

Anhand der beigefügten Zeichnungen wird die Erfindung nachfolgend näher erläutert,
Es zeigen:
Fig. 1: eine Seitenansicht eines Mähdreschers,
Fig. 2: eine vergrößerte perspektivische Ansicht des Ausschnitts X aus Figur 1 in einer ersten Stellung des Deckels,
Fig. 3: die in Figur 2 gezeigte Ansicht in einer zweiten Stellung des Deckels.
Fig, 4: eine perspektivische Detailansicht des Hebemechanismus einer ersten Stellung und
Fig. 5: eine perspektivische Detailansicht des Hebemechanismus in einer zweiten Stellung,

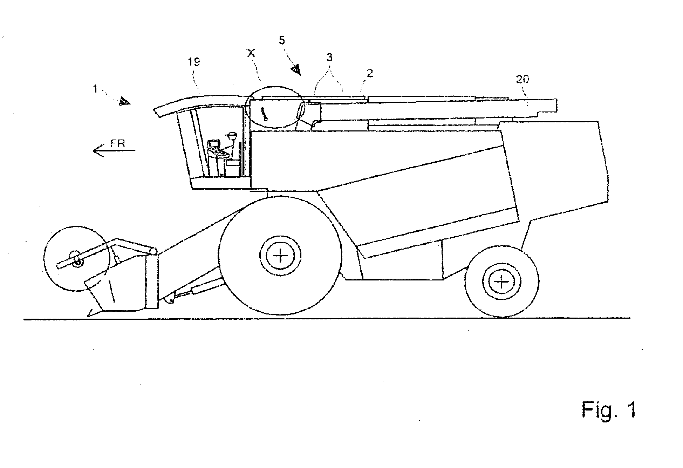

in Figur 1 ist ein Mähdrescher (1) in einer schematischen Seitenansicht dargestellt. Hinter der in Fahrtrichtung (FR) weisenden Fahrerkabine (19) ist Korntank (2) angeordnet der dazu dient, die während des Ernetevorgangs ausgedroschenen und gereinigten Körner zwischenzuspeichern um sie anschießend mittels eines Korntankentleerungsrohres (20) an entsprechende Ladewagen zu übergeben. Der Korntank (2) ist, von Oben mittels eines zweiteiligen Deckels (3) abgedeckt, welcher von einer hier dargestellten Schließstellung (5) in eine Offenstellung verstellbar ist, um das Kornlankfassugsverrnögen zu vergrößern. Auf den Vorgang der Verstellung wird anhand der weiteren Figuren noch naher eingegangen. Es liegt im Rahmen der Erfindung, dass der Korntank (2) auch an einer weiter Hinten gelegenen Stelle des Mähdreschers angeordnet sein kann.

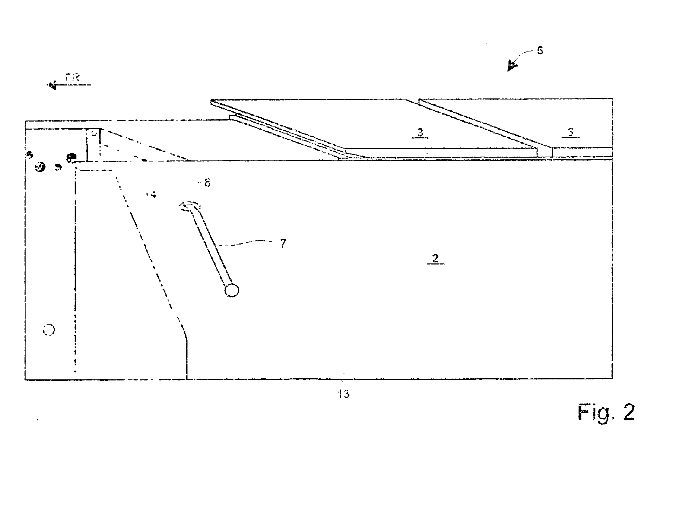

Figur 2 zeigt eine vergrößerte perspektivische Ansicht des Ausschnitts X aus Figur 1. Der Korntank (2) befindet sich hinter der hier nicht dargestellten Fahrerkabine und ist nach Außen hin durch eine die Korntankaußenwand bildende Seitenverkleidung (13) abgedeckt Von Oben befindet sich ein zweiteliger Deckel (3) auf dem der hier in der Schließstellung (5) dargestellt ist. Um den Deckel (3) von der lung (5) in eine Offenstellung zu verstehen, ist im Inneren des Korntanks (2) ein Hebemechanismus angeordnet, der vorn Bediener des Mähdreschers mittels eines durch eine Öffnung (14) der Seitenverkleidung (13) nach Außen ragenden Hebels (7) manuell um seine Drehachse (8) herum betätigbar ist. Der Hebel (7) weist in der die Schließstellung (5) definierten Endlage von der Drehachse (8) aus gesehen nach unten und hinten, so dass die Drehachse (8) in Fahrtrichtung (FR) gesehen dem Hebel (7) Dies dient dazu, dass bei der Vorbeifahrt an Bäumen eventuell herunterhängende Äste an dem Hebel (7) entlang gleiten, ohne sich zwischen dem Hebel (7) und der Seitenwand (13) zu verhaken und dadurch Beschädigungen zu verursachen.

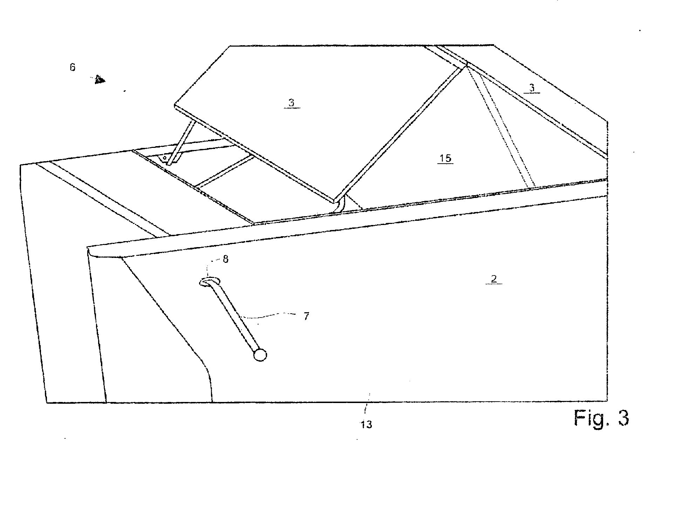

In Figur 3 ist der Ausschnitt X der Figur 1 ebenfalls in einer vergrößerten perspektivischen Darstellung gezeigt, wobei sich der zweiteilige Deckels (3) des Korntanks (2) in einer die zweite Endlage bildende Offenstellung (6) befindet Um die Verstellung zwischen der in Figur 2 dargestellten Schließstellung und der hier dargestellten Offenstellung (6) zu erreichen, hat der Bediener des den Hebel (7) entgegen des Uhrzeigersinns um seine Drehachse (8) herum verschwenkt, wobei der Hebel (7) hierbei einen Kreisbogen von 360° durchlaufen hat und in der selben Stellung steht, wie bei der des Deckels (3). Somit ergibt sich wiederum der Vorteil, dass sich keine Gegenstände wie beispielsweise Äste zwischen dem Hebel und der Seitenverkleidung verfangen können. Weiterhin ergibt sich für den Bediener der Vorteil, dass sich der Kraftangriffspunkt für ihn immer an der gleichen Stelle befindet. Der zweiteilige Deckel (3) ist seitlich mit Seitenwänden (15) verbunden, die es ermöglichen, dass das Erntegut bei der Offenstellung (6) des Deckels (3) höher als die Seitenverkleidung (13) des Korntanks (2) gelagert werden kann. Um den Deckel (3) dann von der Offenstellung (6) wieder in die SchließstellunG zu bewegen, verschwenkt der Bediener den Hebel (7) im Uhrzeigersinn um seine Drehachse (8) herum, so dass er wiederum einen Kreisbogen von 360° durchläuft.

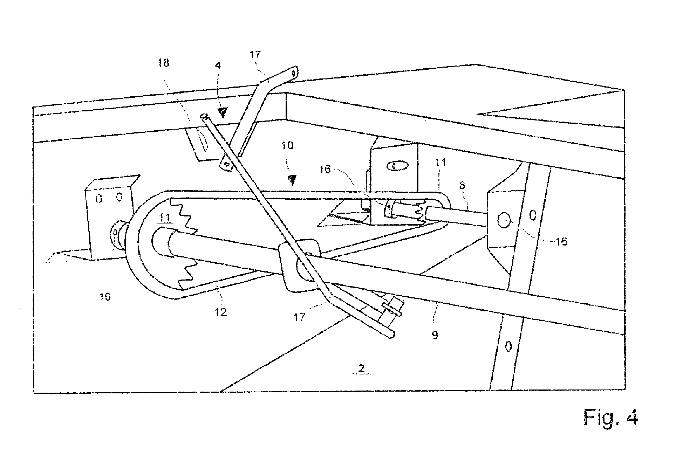

Figur 4 zeigt einen perspektivischen Ausschnitt einer Innenansicht des Korntanks (2), wobei zur vereinfachten der Deckel hier nicht gezeigt ist. Die Drehachse (8) des Hebels ragt in den Korntank (2) hinein und wird dort mittels zweier Lagerpunkte (16) verdrehbar gehalten, Der Hebemechanismus (4) des Deckels besteht zum Einen aus einem mehrteiligen Gestänge (17) eine Wirkverbindung zwischen der Drehachse (9) des Hebemechanismus (4) und Deckel herstellt und zum Anderen aus einer Schiebekulisse (18) die eine Wirkverbindung zwischen dem Deckel und dem Korntank (2) herstellt Die Drehachse (9) des Hebemechanismus (4) wird ebenfalls mittels entsprechender Lagerpunkte (16) in dem Korntank (2) verdrehbar gehalten. Sowohl auf der Drehachse (8) des Hebels als auch auf der Drehachse (9) des Hebemechanismus (4) befindet sich ein Kettenrad (11) eines Kettengetriebes (10), weiche mittels einer Kette (12) miteinander wirkverbunden sind. Durch die Drehung des Hebels wird gleichzeitig auch das auf der Drehachse (8) des Hebels befindliche Kettenrad (11) gedreht, welches die Kette (12) des Kettengetriebes (10) antreibt, Die Kette (12) treibt nun wiederum das auf der Drehachse (9) des Hebemechanismus (4) befindliche Kettenrad (11) an, wodurch die Drehachse (9) eine Drehbewegung macht und das an der Drehachse (9) fixierte Gestänge (17) verschwenkt, weiches dann den Deckel von der Schließstellung in die Offenstellung bewegt. Zur Spannung der Kette (12) sind die Lagerpunkte der Drehachse (8) des Hebels längsverschieblich und fixierbar in dem Korntank (2) ausgebildet,

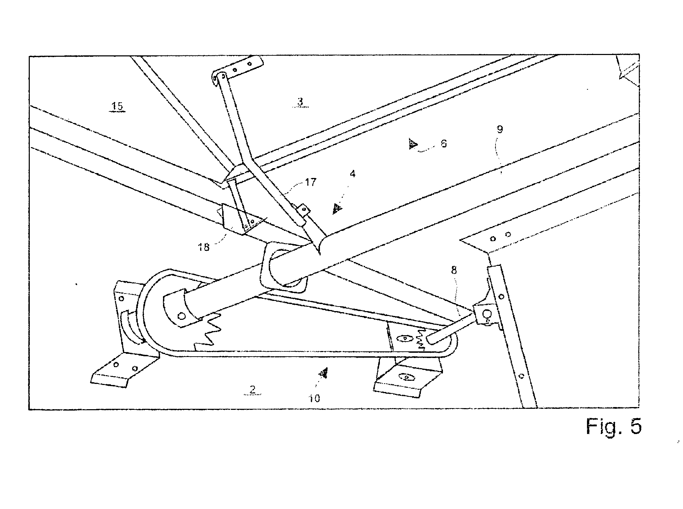

In Figur 5 ist der Hebemechanismus (4) des Deckels (3) in einer perspektivischen Ansicht in der Offenstellung (6) dargestellt. Durch die durch den Hebel ausgelöste Bewegung der Drehachse (8) des Hebels, des Kettengetriebes (10) und der Drehachse (9) des Hebemechanismus (4) drückt das mehrteilige Gestänge (17) den Deckel (3) in die Offenstellung (6). Um auch in der Offenstellung (6) den in Fahrtrichtung gesehen mittigen Bereich des Korntanks (2), in dem sich der hier nicht dargestellte Befüllstutzen des Korntanks (2) befindet, durch den Deckel (3) abzudecken, ist das Gestänge (17) an entsprechender Stelle mit dem Deckel (3) verbunden Damit eine entsprechende Bewegung des Deckels (3) ist, ist dieser an seinem einen Ende mit einer Schiebekulisse (18) wirkverbunden, die die Längsbewegung des Deckels (3) realisiert. Um das Korntankfassungsvermögen insbesondere in dem beschriebenen mittigen Bereich zu ist der Deckel (3) mit entsprechenden Seitenwänden (15) verbunden, die in der Offenstellung (6) über die Oberkante des Korntank (2) hinausragen.

### Bezugszeichenliste:

- 1: Mähdrescher
- 2: Korntank
- 3: Deckel
- 4: Hebemechanismus
- 5: Schließstellung
- 6: Offenstellung
- 7: Hebel
- 8: Drehachse
- 9: Drehachse
- 10: Kettengetriebe
- 11: Kettenrad
- 12: Kette
- 13: Seitenverkleidung
- 14: Öffnung
- 15: Seitenwand
- 16: Lagerpunkt
- 17: Gestänge
- 18: Schiebekulisse
- 19: Fahrerkabine
- 20: Korntankentleerungsrohr
- FR: Fahrtrichtung

## Patentansprüche

1. Mähdrescher (1) mit einem Korntank (2), zumindest einem den Korntank (2) abdeckenden Deckel (3), welche mittels eines Hebemechanismus (4) von einer Schließstellung (5) als erste Endlage in eine das Korntankfassungsvermögen vergrößernde Offenstellung (6) als zweite Endlage bringbar ist, wobei der Hebemechanismus (4) durch einen manuell bedienbaren Heber (7) betätigbar ist,
**dadurch gekennzeichnet,**
**dass** der Hebel (7) bei der Verstellung zwischen den beiden Endlagen um seine Drehachse (8) herum einen Kreisbogen von mindestens 270° durchläuft.

2. Mähdrescher (1) nach Anspruch 1, **dadurch gekennzeichnet, dass** der Hebel (7) bei der Verstellung zwischen den beiden Endlagen um seine Drehachse (8) herum einen Kreisbogen von annähernd 360° durchläuft.

3. Mähdrescher (1) nach einem der vorstehenden Ansprüche, **dadurch gekennzeichnet, dass** die Drehachse (8) des Hebels (7) im Wesentlichen quer zur Längsachse des Mähdrescher (1) liegt.

4. Mähdrescher (1) nach einem der vorstehenden Ansprüche, **dadurch gekennzeichnet, dass** der Hebel (7) in einem Seitenbereich des Mähdreschers (1) angeordnet ist.

5. Mähdrescher (1) nach einem der vorstehenden Ansprüche, **dadurch gekennzeichnet, dass** in Fahrtrichtung (FR) gesehen die Drehachse (8) den Hebel (7) in zumindest einer seiner Endlagen vorauseilt.

6. Mähdrescher (1) nach einem der Ansprüche 1 bis 2, **dadurch gekennzeichnet, dass** die Drehachse (8) des Hebels (7) im Wesentlichen parallel zur Längsachse des Mähdreschers (1) liegt.

7. mähdrescher (1) nach Anspruch 6, **dadurch gekennzeichnet, dass** der Hebel (7) im Bereich einer in Fahrtrichtung (FR) weisenden und quer zur Längsachse des Mähdreschers (1) orientierten Seitenwandung des Mähdreschers (1) angeordnet ist.

8. Mähdrescher (1) nach einem der vorstehenden Ansprüche, **dadurch gekennzeichnet, dass** die Drehachse (8) des Hebels (7) und zumindest eine Drehachse (9) des Hebemechanismus (4) versetzt zueinander angeordnet sind.

9. Mähdrescher (1) nach Anspruch 8, **dadurch gekennzeichnet, dass** zwischen der Drehachse (8) des Hebels (7) und der Drehachse (9) des Hebemechanismus (4) ein Getriebe angeordnet ist.

10. Mähdrescher (1) nach Anspruch 9, **dadurch gekennzeichnet, dass** das Getriebe als formschlüssiges Getriebe, insbesondere als Kettengetriebe (10), alls Doppelgelenk oder als Zahnradgetriebe ausgebildet ist.

11. Mähdrescher (1) nach einem der Ansprüche 9 oder 10, **dadurch gekennzeichnet, dass** das Getriebe zwischen der Drehachse (8) des Hebels (7) als Eingangsseite des Getriebes und der Drehachse (9) des Hebemechanismus (4) ais Ausgangsseile des Getriebes ein Übersetzunosverhältnis größer 1 aufweist.

12. Mähdrescher (1) nach einem der vorstehenden Ansprüche, **dadurch gekennzeichnet, dass** der Drehachse (8) des Hebels (7) und/oder der zumindest einen Drehachse (9) des Hebemechanismus (4) Anschläge zugeordnet sind, die die beiden Endlagen festlegen.

13. Mähdrescher (1) nach einem der vorstehenden Ansprüche, **dadurch gekennzeichnet, dass** der Hebel (7) von seiner Drehachse (8) aus gesehen als einseitiger Hebel, als zwei- oder mehrseitiger Hebel oder als um die Drehachse (8) rotierendes Handrad ausgebildet ist.

## Claims

1. A combine harvester (1) comprising a grain tank (2), at least one cover (3) which covers the grain tank (2) and which is movable by means of a lift mechanism from a closure position (5) as a first end position into an open position (6) of increasing the grain tank capacity as a second end position, wherein the lift mechanism (4) is actuable by a manually operable lever (6),
**characterised in that**
upon displacement between the two end positions the lever (7) passes through a circular arc of at least 270° about its axis of rotation (8).

2. A combine harvester (1) according to claim 1 **characterised in that** upon displacement between the two end positions the lever (7) passes through a circular arc of approximately 360° about its axis of rotation (8).

3. A combine harvester (1) according to one of the preceding claims **characterised in that** the axis of rotation (8) of the lever (7) is substantially transverse with respect to the longitudinal axis of the combine harvester (1).

4. A combine harvester (1) according to one of the preceding claims **characterised in that** the lever (7) is arranged in a side region of the combine harvester (1).

5. A combine harvester (1) according to one of the preceding claims **characterised in that** viewed in the direction of travel (FR) the axis of rotation (8) leads the lever (7) in at least one of its end positions.

6. A combine harvester (1) according to one of claims 1 to 2 **characterised in that** the axis of rotation (8) of the lever (7) is substantially parallel to the longitudinal axis of the combine harvester (1).

7. A combine harvester (1) according to claim 6 **characterised in that** the lever (7) is arranged in the region of a side wall of the combine harvester (1), that faces in the direction of travel (FR) and is oriented transversely relative to the longitudinal axis of the combine harvester (1).

8. A combine harvester (1) according to one of the preceding claims **characterised in that** the axis of rotation (8) of the lever (7) and at least one axis of rotation (9) of the lift mechanism (4) are arranged displaced relative to each other.

9. A combine harvester (1) according to claim 8 **characterised in that** a transmission is arranged between the axis of rotation (8) of the lever (7) and the axis of rotation (9) of the lift mechanism (4).

10. A combine harvester (1) according to claim 9 **characterised in that** the transmission is in the form of a positively locking transmission, in particular a chain transmission (10), a universal joint arrangement or a gear transmission.

11. A combine harvester (1) according to one of claims 9 or 10 **characterised in that** the transmission has a transmission ratio of greater than 1 between the axis of rotation (8) of the lever (7) as the input side of the transmission and the axis of rotation (9) of the lift mechanism (4) as the output side of the transmission.

12. A combine harvester (1) according to one of the preceding claims **characterised in that** associated with the axis of rotation (8) of the lever (7) and/or the at least one axis of rotation (9) of the lift mechanism (4) are abutments which establish the two end positions.

13. A combine harvester (1) according to one of the preceding claims **characterised in that** the lever (7), viewed from its axis of rotation (8), is in the form of a one-sided lever, a two-sided or multi-sided lever or a hand wheel rotating about the axis of rotation (8).

## Revendications

1. Moissonneuse-batteuse (1) avec une trémie à grain (2), au moins un couvercle (3) recouvrant la trémie à grain (2), lequel peut être amené au moyen d'un mécanisme de levage (4) d'une position fermée (5) formant une première position extrême à une position ouverte (6) agrandissant la capacité de la trémie à grain et formant une deuxième position extrême, le mécanisme de levage (4) pouvant être actionné par un levier (7) qui peut être manoeuvré manuellement, **caractérisée en ce que** le levier (7) parcourt un arc de cercle d'au moins 270° autour de son axe de rotation (8) lors de son déplacement entre les deux positions extrêmes.

2. Moissonneuse-batteuse (1) selon la revendication 1, **caractérisée en ce que** le levier (7) parcourt un arc de cercle d'environ 360° autour de son axe de rotation (8) lors de son déplacement entre les deux positions extrêmes.

3. Moissonneuse-batteuse (1) selon une des revendications précédentes, **caractérisée en ce que** l'axe de rotation (8) du levier (7) est sensiblement perpendiculaire à l'axe longitudinal de la moissonneuse-batteuse (1).

4. Moissonneuse-batteuse (1) selon une des revendications précédentes, **caractérisée en ce que** le levier (7) est disposé dans une région latérale de la moissonneuse-batteuse (1).

5. Moissonneuse-batteuse (1) selon une des revendications précédentes, **caractérisée en ce que**, par rapport au sens de la marche (FR), l'axe de rotation (8) est placé avant le levier (7) dans au moins une des positions extrêmes de celui-ci.

6. Moissonneuse-batteuse (1) selon une des revendications 1 à 2, **caractérisée en ce que** l'axe de rotation (8) du levier (7) est sensiblement parallèle à l'axe longitudinal de la moissonneuse-batteuse (1).

7. Moissonneuse-batteuse (1) selon la revendication 6, **caractérisée en ce que** le levier (7) est disposé dans la région d'une paroi latérale de la moissonneuse-batteuse (1) dirigée dans le sens de la marche (FR) et orientée perpendiculairement à l'axe longitudinal de la moissonneuse-batteuse (1).

8. Moissonneuse-batteuse (1) selon une des revendications précédentes, **caractérisée en ce que** l'axe de rotation (8) du levier (7) et au moins un axe de rotation (9) du mécanisme de levage (4) sont décalés l'un par rapport à l'autre.

9. Moissonneuse-batteuse (1) selon la revendication 8, **caractérisée en ce qu'**une transmission est disposée entre l'axe de rotation (8) du levier (7) et l'axe de rotation (9) du mécanisme de levage (4).

10. Moissonneuse-batteuse (1) selon la revendication 9, **caractérisée en ce que** la transmission est conformée en transmission à liaison par complémentarité de forme, en particulier en transmission à chaîne (10), en double articulation ou en transmission par engrenages.

11. Moissonneuse-batteuse (1) selon une des revendications 9 ou 10, **caractérisée en ce que** la transmission présente un rapport de transmission supérieur à 1 entre l'axe de rotation (8) du levier (7) formant le côté entrée et l'axe de rotation (9) du mécanisme de levage (4) formant le côté sortie de la transmission.

12. Moissonneuse-batteuse (1) selon une des revendications précédentes, **caractérisée en ce que** des butées qui définissent les deux positions extrêmes sont associées à l'axe de rotation (8) du levier (7) et/ou audit au moins un axe de rotation (9) du mécanisme de levage (4).

13. Moissonneuse-batteuse (1) selon une des revendications précédentes, **caractérisée en ce que** le levier (7), vu depuis son axe de rotation, est conformé en levier unilatéral, en levier bi- ou multilatéral ou en roue à main tournant autour de l'axe de rotation (8).
